# EUROPÄISCHE PATENTSCHRIFT

(11) **EP 1 201 575 B1**
(45) Veröffentlichungstag und Bekanntmachung des Hinweises auf die Patenterteilung: **02.01.2004**
(21) Anmeldenummer: 01118471.0
(22) Anmeldetag: 01.08.2001
(51) Int. Cl.: B66C 13/04, B65G 61/00

(54) **Vorrichtung zur Aufnahme und zum Transport eines Gegenstandes**
Device for receiving and transferring items
Dispositif de réception et transport d'articles

(30) Priorität: 25.10.2000 AT 7912000
(43) Veröffentlichungstag der Anmeldung: 02.05.2002
(73) Patentinhaber: Veitsch-Radex GmbH & Co, 1100 Wien (AT)
(72) Erfinder: Tschinkel, Arnold, 8793 Gai (AT)
(74) Vertreter: Becker, Thomas, Dr., Dipl.-Ing.

(56) Entgegenhaltungen:
- EP-A- 0 454 923
- EP-A- 0 985 629
- WO-A-99/57057
- FR-A- 2 592 368
- US-A- 4 815 614

## Beschreibung

Die Erfindung betrifft eine Vorrichtung zur Aufnahme und zum Transport eines Gegenstandes.

Sowohl der Stand der Technik als auch die Erfindung werden nachstehend, sofern nicht anders angegeben, beispielhaft für eine gattungsgemäße Vorrichtung zum Setzen eines Gasspülsteins in den Boden eines metallurgischen Gefäßes näher erläutert. Die Vorrichtung ist anwendungsmäßig jedoch nicht beschränkt.

Gasspülsteine der genannten Art dienen zur sekundärmetallurgischen Behandlung von Stahlschmelzen. Sie werden in die Wand oder den Boden eines Schmelzgefäßes, beispielsweise einer Pfanne oder eines Tundish, eingebaut.

Häufig geschieht der Einbau der meist kegelstumpfförmigen Gasspülsteine in eine korrespondierende Öffnung eines sogenannten Lochsteins. Gasspülstein und Lochstein können dabei über eine Mörtelfuge verbunden werden.

Wegen der Größe und des Gewichtes der Gasspülsteine sowie der zum Teil hohen Temperaturbelastungen beim Setzen an einem noch heißen metallurgischen Schmelzgefäß ist man seit langem bestrebt, den Einbau und/oder Ausbau mit geeigneten Maschinen auszuführen.

Dazu sind stativartige Konstruktionen bekannt, die am metallischen Außenmantel des metallurgischen Schmelzgefäßes befestigt werden.

Darüber hinaus sind größere, nach Art eines Roboters gestaltete, gerüstartige Vorrichtungen aus der Praxis bekannt, die eine Greifeinrichtung für den Gasspülstein aufweisen. Die Positionierung sowie der Einbau erfolgen anschließend von Hand. Nachteilig dabei ist unter anderem die komplexe Regelung.

Aus US 4,815,614 ist ein System zum Steuern eines Auslegersystems eines Krans bekannt, welches hydraulische Antriebsmittel sowie wenigstens einen Belastungsanzeiger aufweist, wobei auf der Basis der Messangaben dieses Zeigers die Geschwindigkeit des Auslegesystems so geregelt wird, dass die größte zulässige Geschwindigkeit des Auslegersystems bei einer Abnahme der Belastung zunimmt und entsprechend bei Zunahme der Belastung abnimmt. Auf der Basis von Geschwindigkeitsinformationen und der Belastungsangabe führt ein Mikroprozessor Regelund Filterberechnungen der Geschwindigkeitsinformationen durch, die an Regelventile übermittelt werden. Durch diese Steuerinformationen werden die Öffnungs- und Schließgeschwindigkeit der Ventile und dadurch die Beschleunigung und Verzögerung der Antriebsmittel gesteuert.

Der Erfindung liegt die Aufgabe zugrunde, eine Vorrichtung der genannten Art mit Gewichtsausgleich anzubieten, die unabhängig von der Lage und dem Gewicht des zu greifenden Gegenstandes, also auch unabhängig von einem jeweils auf ein Trägergerüst wirkenden Drehmoment, den Gegenstand "quasi in Schwebe" hält. Die Vorrichtung soll also so gestaltet sein, daß der Gegenstand zum Zeitpunkt der Kompensation im Balancezustand ist und damit der Monteur keine oder nur geringe Kräfte oder Momente überwinden muß, wenn er den Gegenstand an die gewünschte Stelle transportiert beziehungsweise einbaut.

Der Erfindung liegt die Überlegung zugrunde, die Vorrichtung im Bereich einer Kompensationseinrichtung in einfacher Weise mit einer Gewichtserkennung auszurüsten und mit dem so ermittelten Meßwert über ein DruckRegelventil den Druck einer Kolben-Zylinder-Einheit so zu verändern, daß der Gegenstand in Schwebe bleibt, also weder absinkt noch aufsteigt beziehungsweise die Vorrichtung insgesamt in Balance bleibt. Zu jedem Zeitpunkt kann auf einfache Weise eine Gewichtskompensation erfolgen.

Konkret sieht die Erfindung in ihrer allgemeinsten Ausführungsform eine Vorrichtung zur Aufnahme und zum Transport eines Gegenstandes vor, welche folgende Merkmale aufweist:
- ein Gerüst
- einen, am Gerüst über ein Drehgelenk geführten Hebel,
- eine Kolben-Zylinder-Einheit ist mit einem ersten Ende am Hebel und mit einem zweiten Ende ortsfest angeordnet,
- der Gegenstand ist am Hebel befestigbar,
- der Kolben-Zylinder-Einheit sind eine Wägezelle, eine Kolbenstangenbremse und eine Steuerung zugeordnet, wobei
- die Steuerung in Abhängigkeit von dem durch die Wägezelle bei aktivierter Kolbenstangenbremse ermittelten Meßwert den Druck in der Kolben-Zylinder-Einheit so steuert, dass der Gegenstand bei nicht aktivierter Kolbenstangenbremse weder aufsteigt noch absinkt, also "in Schwebe bleibt".

Der Begriff "Gerüst" umfaßt erfindungsgemäß alle Arten von Trägern, Stativen oder ähnlichen Konstruktionen, die auf einem Boden oder an einem Bauteil befestigt werden können und an denen weitere Bauteile angelenkt werden können.

Der Begriff "Hebel" steht stellvertretend für alle Arten von Hebelsystemen, die um mindestens einen Drehpunkt schwenkbar sind.

Der Begriff "Handhabungsteil" steht stellvertretend für alle Einrichtungen, mit denen sich Gegenstände greifen, bewegen oder sonstwie in ihrer Position und Lage verändern lassen. Der Begriff Handhabungsteil umfaßt danach beispielsweise alle Arten von Gelenken, Gelenkarmen, Teleskopeinrichtungen, Greifeinrichtungen etc., die einzeln oder in Kombination einen Handhabungsteil bilden können.

Der Begriff "Wägezelle" ist so zu verstehen, daß die auf die Kolben-Zylinder-Einheit wirkende Kraft gemessen werden kann. Entsprechend kann es sich bei der Wägezelle um eine mechanische Waage, eine elektronische Waage, um Dehnungsmeßstreifen oder dergleichen handeln. Im weiteren soll ein dieser Kraft entsprechendes Signal verarbeitet werden, wie noch beschrieben wird

Der Begriff "Kolbenstangenbremse" ist im Zusammenhang mit der Kolben-Zylinder-Einheit so zu verstehen, daß der im Zylinder geführte, beispielsweise druckbelastete Kolben beziehungsweise die Kolbenstange arretiert oder gebremst werden kann.

Der Begriff "Steuerung" schließlich steht stellvertretend für alle Arten von Steuer- oder Regeleinrichtungen, mit denen Meßwerte erfaßt, verglichen und/oder korrigiert sowie Signale von Bauteilen empfangen und an diese oder andere Bauteile weitergegeben werden können.

Üblicherweise wird die Vorrichtung so aufgebaut sein, daß mit der Kolben-Zylinder-Einheit der Handhabungsteil zumindest mittelbar bewegt werden kann, wobei sich eine Ausführungsform anbietet, bei der die Kolben-Zylinder-Einheit auf einer Seite des Gerüstes und das Handhabungsteil auf der anderen Seite liegt.

Dabei kann die Wägezelle in die Kolben-Zylinder-Einheit baulich integriert sein, beispielsweise an dem dem Kolben gegenüberliegenden (oberen) Ende der Kolben-Zylinder-Einheit.

Letztere kann sowohl pneumatisch wie hydraulisch arbeiten. Beispielsweise ist die pneumatische Einheit mit einer Entlüftungseinrichtung ausgebildet, um einen Überdruck, wie nachstehend näher beschrieben wird, abzubauen.

Nach einer Ausführungsform besteht der Handhabungsteil aus gelenkig und/oder teleskopartig miteinander verbundenen Handhabungsarmen sowie einer Greifeinrichtung für den Gegenstand am freien Ende. Dabei können die einzelnen Handhabungsarme in allen Richtungen des Koordinatensystems bewegbar/verschwenkbar angeordnet werden. Dies ist insbesondere dann wichtig, wenn der Transport- oder Einbauraum für den Gegenstand beengt ist, so daß eine hohe Beweglichkeit der Vorrichtung gefordert wird.

Der Hebel oder die Arme, die die Kolben-Zylinder-Einheit mit dem Handhabungsteil verbinden, können nach Art eines Parallelogramms am Gerüst geführt werden, wie dies in der folgenden Figurenbeschreibung gezeigt wird. Sie werden in der Regel horizontal verlaufen. Entsprechend ist die Ausrichtung der Kolben-Zylinder-Einheit überwiegend vertikal.

Als Hebel kann aber auch jede andere Verbindung zwischen dem Gegenstand einerseits und der Kolben-Zylinder-Einheit andererseits gewählt werden. Eine zweckmäßige Ausführungsform sieht vor, den Gegenstand im Abstand zur Kolben-Zylinder-Einheit zu befestigen.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen - jeweils in schematisierter Darstellung -
- Figur 1:: eine erfindungsgemäße Vorrichtung in Seitenansicht

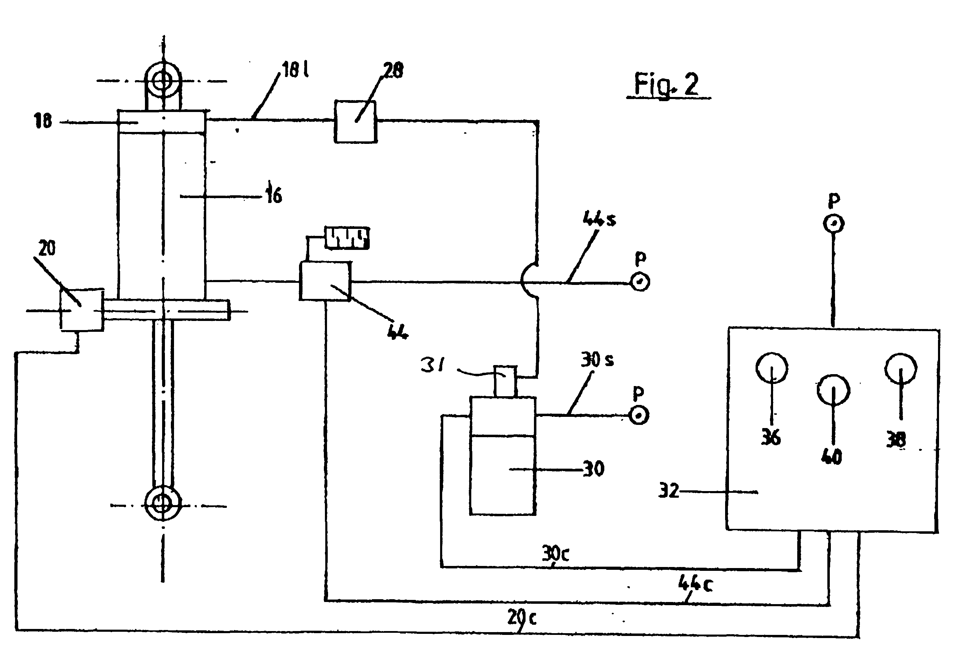

- Figur 2:: eine prinzipielle Schaltskizze für die Vorrichtung nach Figur 1.

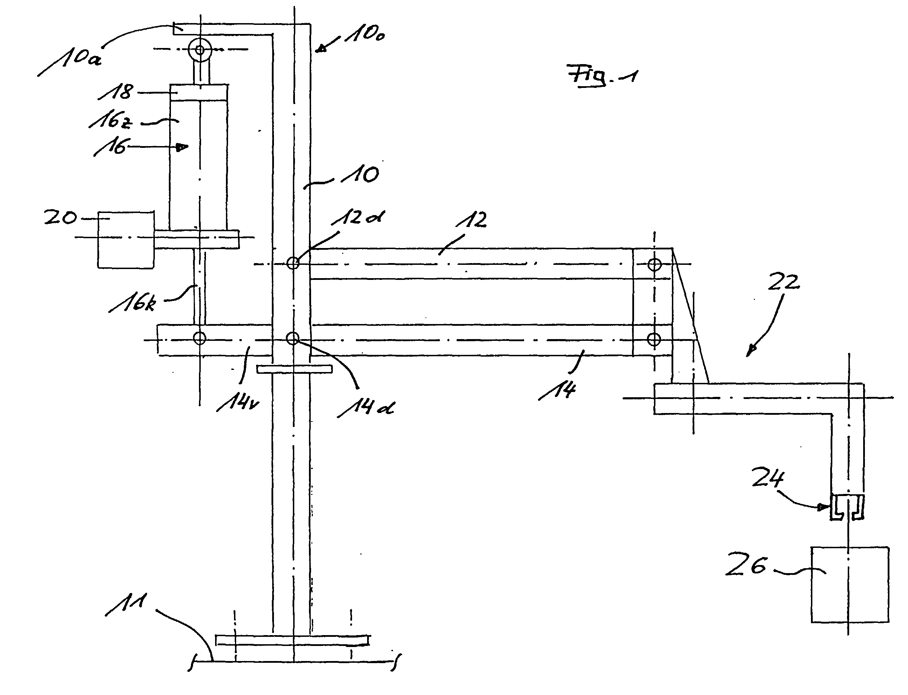

Gemäß Figur 1 umfaßt die Vorrichtung ein Gerüst 10, welches auf einem Boden 11 befestigt werden kann und an seinem oberen Ende 10o abgewinkelt ist (Gerüstarm 10a).

Etwa mittig weist das Gerüst 10 zwei Drehgelenke 12d, 14d auf, an denen Arme 12, 14 gelenkig angeschlagen sind, die zusammen einen Hebel H bilden. Der untere Arm 14 überragt das Gerüst 10 in Figur 1 nach links (entsprechend dem Gerüstarm 10a) mit einem Abschnitt 14v.

Eine Kolben-Zylinder-Einheit 16 erstreckt sich parallel zum Gerüst 10 und ist endseitig mit dem Gerüstarm 10a beziehungsweise dem Abschnitt 14v des Arms 14 verbunden. Konkret erfolgt die Verbindung zum Abschnitt 14v über das Ende der Kolbenstange 16k und die Verbindung zum Gerüstarm 10a vom Zylinder 16z, wobei zwischen dem Zylinder 16z und dem Gerüstarm 10a noch eine Wägezelle 18 angeordnet ist.

Unterhalb des Zylinders 16z ist eine Kolbenstangenbremse 20 vorgesehen, mit der die Kolbenstange 16k in ihrer Axialbewegung (parallel zum Zylinder 16z) gestoppt oder freigegeben werden kann.

An das in der Figur jeweils rechte Ende der Arme 12, 14 schließt sich ein nur schematisch dargestellter Handhabungsteil 22 an, an dessen Ende (ebenfalls nur schematisch gezeichnet) eine Greifeinrichtung 24 liegt. Die einzelnen Bestandteile des Handhabungsteils 22, einschließlich der Greifeinrichtung 24 sind untereinander über entsprechende (nicht dargestellte) Gelenke frei beweglich, ebenso wie die Verbindung zu den Armen 12, 14 so ausgeführt ist, daß der Handhabungsteil 22 in beliebiger Ausrichtung zu den Armen 12, 14 positionierbar ist.

Die Funktionsweise der Vorrichtung und insbesondere des Gewichtsausgleichs wird anhand der Manipulation eines Gasspülsteins beschrieben:

In der Ausgangsposition befindet sich die Vorrichtung ohne Last "im Schwebezustand". Dabei ist die Bremse 20 gelöst und in der Kolben-Zylinder-Einheit 16 herrscht der Druck, der notwendig ist, um die Arme 12, 14 in einer "stabilen Position" zu halten, wie beispielhaft in Figur 1 dargestellt. Der Druck in der Kolben-Zylinder-Einheit 16 kompensiert den längeren Hebelarm mit der Greifeinrichtung 24 auf der anderen Seite des Gerüstes 10.

Über einen Schalter 38 an einem Steuerpult 32 kann der Systemdruck P auf die Kolben-Zylinder-Einheit 16 aufgebracht werden, um die parallel dazu von der Greifeinrichtung 24 aufgenommene Last 26 anzuheben. Über eine entsprechende Steuerung wird die Bremse 20 unmittelbar danach aktiviert und die jetzt auf die Kolben-Zylinder-Einheit 16 durch die Last 26 wirkende Kraft mit Hilfe der Wägezelle 18 gemessen. Der Meßwert wird über eine Leitung 181 in eine Datenverarbeitungsanlage 31 gegeben und in ein Regelsignal für einen Druckregler 30 umgesetzt. Der Druckregler 30 wandelt das Regelsignal in ein pneumatisches Steuersignal um, welches über eine Leitung 30c zum Steuerpult 32 gegeben wird. Von dort wird das Signal über eine Steuerleitung 44c zu einem Regelventil 44 gegeben, welches den zur Kompensation erforderlichen Druck in der Kolben-Zylinder-Einheit 16 einstellt.

Über die Steuerung wird die Bremse 20 anschließend wieder gelöst. Der nachgeregelte Druck in der Kolben-Zylinder-Einheit 16 sorgt dafür, daß nunmehr, mit anhängender Last 26, die Vorrichtung gleichwohl insgesamt weiter (erneut) "in Schwebe" bleibt. Der Handhabungsteil 22 mit dem Gasspülstein 26 sinkt nicht unter Gravitationseinfluß ab.

Die Steuerung hält im weiteren den Druck in der Kolben-Zylinder-Einheit 16 konstant, so daß zum Verschwenken der Arme 12, 14 und zur Manipulation des Gasspülsteins 26 nur noch geringe Kräfte aufzuwenden sind. Der Monteur greift dabei beispielsweise den Handhabungsteil 22 oder direkt die Last 26 und führt diese an die gewünschte Stelle.

Nach jeder Änderung der Kräfteverhältnisse (z. B. durch Verschwenken des Handhabungsteils, Belastung/Entlastung des Handhabungsteils durch Aufnahme/Ablegen des Spülsteins) kann durch neuerliches Aktivieren der vorgenannten Steuerungsfunktionen der Druck in der Kolben-Zylinder-Einheit angepaßt beziehungsweise nachgeregelt werden, um den gewünschten "Balancezustand" wieder zu erreichen.

Zum Ablegen der Last wird ein Funktionsschalter 36 am Steuerpult 32 aktiviert. Der Druck in der Kolben-Zylinder-Einheit 16 wird auf den Ausgangszustand abgesenkt und der Handhabungsteil 22 mit der Last 26 sinkt unter der Last 26 nach unten.

Das Steuerpult 32 umfaßt ferner einen Schalter 40, mit dem die Bremse 20, unabhängig davon, ob eine Last 26 angehängt ist oder nicht, arretiert werden kann.

Die Vorrichtung ist insgesamt so aufgebaut, daß die Bestimmung der erforderlichen Kompensationskraft (des erforderlichen Kompensationsdrucks) und damit die Nachjustierung der Vorrichtung zur Erzielung des beschriebenen Schwebezustandes in sehr kurzer Zeit (wenige Sekunden bishin zu Bruchteilen von Sekunden) erfolgen kann.

## Patentansprüche

1. Vorrichtung zur Aufnahme und zum Transport eines Gegenstandes (26) mit folgenden Merkmalen:
einem Gerüst (10)
einem, am Gerüst (10) über ein Drehgelenk (12d, 14d) geführten Hebel (H),
eine Kolben-Zylinder-Einheit (16) ist mit einem ersten Ende am Hebel (H) und mit einem zweiten Ende ortsfest angeordnet,
der Gegenstand (26) ist am Hebel (H) befestigbar,
der Kolben-Zylinder-Einheit (16) sind eine Wägezelle (18), eine Kolbenstangenbremse (20) und eine Steuerung (28) zugeordnet, wobei
die Steuerung (28) in Abhängigkeit von dem durch die Wägezelle (18) bei aktivierter Kolbenstangenbremse (20) ermittelten Meßwert den Druck in der Kolben-Zylinder-Einheit (16) so steuert, dass der Gegenstand (26) bei nicht aktivierter Kolbenstangenbremse (20) in Schwebe bleibt.

2. Vorrichtung nach Anspruch 1, bei der der Gegenstand (26) mit Abstand zur Kolben-Zylinder-Einheit (16) am Hebel (H) befestigbar ist.

3. Vorrichtung nach Anspruch 1, bei der der Hebel (H) aus zwei, parallel zueinander verlaufenden Armen (12, 14) besteht.

4. Vorrichtung nach Anspruch 1, bei der die Kolben-Zylinder-Einheit (16) in einem Winkel ungleich 180° zum Hebel (H) angeordnet ist.

5. Vorrichtung nach Anspruch 1, mit einem Handhabungsteil (22) für den Gegenstand (26).

6. Vorrichtung nach Anspruch 1 bei der die Kolben-Zylinder-Einheit (16) mit ihrem zweiten Ende am Gerüst (10) befestigt ist.

7. Vorrichtung nach Anspruch 1, bei der die Wägezelle (18 )in die Kolben-Zylinder-Einheit (16) baulich integriert ist.

8. Vorrichtung nach Anspruch 1, bei der die Wägezelle (18) an dem dem Kolben (16k) gegenüberliegenden Ende der Kolben-Zylinder-Einheit (16) angeordnet ist.

9. Vorrichtung nach Anspruch 1, bei der die Kolben-Zylinder-Einheit (16) eine pneumatisch arbeitende Einheit ist.

10. Vorrichtung nach Anspruch 1, bei der die Kolben-Zylinder-Einheit (16) eine Entlüftungseinrichtung (42) aufweist.

11. Vorrichtung nach Anspruch 5, bei der der Handhabungsteil (22) aus gelenkig und/oder teleskopartig miteinander verbundenen Handhabungsarmen sowie einer Greifeinrichtung (24) für den Gegenstand (26) am freien Ende besteht.

12. Vorrichtung nach Anspruch 3, bei der die Arme (12, 14) nach Art eines Parallelogramms am Gerüst (10) geführt sind.

13. Vorrichtung nach Anspruch 1, bei der der Zylinder (16z) der Kolben-Zylinder-Einheit (16) am Gerüst (10) und der Kolben (16k) am Hebel (H) angelenkt ist.

14. Vorrichtung nach Anspruch 1, bei der die Kolben-Zylinder-Einheit (16) auf einer ersten Seite des Drehgelenks (12d, 14d) angeordnet ist und der Gegenstand (26) an einer zweiten Seite des Drehgelenks (12d, 14d) befestigbar ist.

## Claims

1. A device for picking up and for transporting an object (26) with the following characteristics:
a frame (10),
a lever (H) that is guided on the frame (10) by means of a pivot joint (12d, 14d),
a piston-cylinder unit (16) is arranged on the lever (H) with a first end and arranged stationarily with a second end,
the object (26) can be fixed on the lever (H), and
a load cell (18), a piston rod brake (20) and a control unit (28) are assigned to the piston-cylinder unit (16), wherein
the control unit (28) regulates the pressure in the piston-cylinder unit (16) in dependence on the value measured by the load cell (18) while the piston rod brake (20) is activated, namely in such a way that the object (26) remains poised when the piston rod brake (20) is not activated.

2. The device according to Claim 1, wherein the object (26) can be fixed on the lever (H) such that it is spaced apart from the piston-cylinder unit (16).

3. The device according to Claim 1, wherein the lever (H) consists of two arms (12, 14) that extend parallel to one another.

4. The device according to Claim 1, wherein the piston-cylinder unit (16) and the lever (H) form an angle that is not equal to 180°.

5. The device according to Claim 1, with a handling part (22) for the object (26).

6. The device according to Claim 1, wherein the piston-cylinder unit (16) is fixed on the frame (10) with its second end.

7. The device according to Claim 1, wherein the load cell (18) is structurally integrated into the piston-cylinder unit (16).

8. The device according to Claim 1, wherein the load cell (18) is arranged on the end of the piston-cylinder unit (16) which lies opposite of the piston (16k).

9. The device according to Claim 1, wherein the piston-cylinder unit (16) operates pneumatically.

10. The device according to Claim 1, wherein the piston-cylinder unit (16) contains a ventilation device (42).

11. The device according to Claim 5, wherein the handling part (22) consists of handling arms that are connected to one another in an articulated and/or telescopic fashion, as well as a gripping device (24) for the object (26) on the free end.

12. The device according to Claim 3, wherein the arms (12, 14) are guided on the frame (10) in the form of a parallelogram.

13. The device according to Claim 1, wherein the cylinder (16z) of the piston-cylinder unit (16) is coupled to the frame (10) and the piston (16k) is coupled to the lever (H).

14. The device according to Claim 1, wherein the piston-cylinder unit (16) is arranged on a first side of the pivot joint (12d, 14d) and the object (26) can be fixed on a second side of the pivot joint (12d, 14d).

## Revendications

1. Dispositif de saisie et de transport d'un objet (26) comportant les caractéristiques suivantes :
une charpente (10),
un levier (H) guidé par un joint articulé (12d, 14d) sur la charpente (10),
une unité piston-vérin (16) est fixée par une première extrémité au levier (H) et disposée par une deuxième extrémité à un emplacement fixe,
l'objet (26) peut être fixé sur le levier (H),
à l'unité piston-vérin (16) sont associés une cellule de pesage (18), un frein de bielle de piston (20) et une commande (28),
la commande (28) dirigeant la pression dans l'unité piston-vérin (16) en fonction de la valeur de mesure déterminée par la cellule de pesage (18) lorsque le frein de bielle de piston (20) est actionné de manière à ce que l'objet (26) reste en suspens lorsque le frein de bielle de piston (20) n'est pas activé.

2. Dispositif selon la revendication 1, dans lequel l'objet (26) peut être fixé au levier (H) à distance de l'unité piston-vérin (16).

3. Dispositif selon la revendication 1, dans lequel le levier (H) consiste en deux bras (12, 14) s'étendant parallèlement l'un à l'autre.

4. Dispositif selon la revendication 1, dans lequel l'unité piston-vérin (16) est disposée dans un angle différent de 180° par rapport au levier (H).

5. Dispositif selon la revendication 1, comportant une pièce de manoeuvre (22) pour l'objet (26).

6. Dispositif selon la revendication 1, dans lequel l'unité piston-vérin (16) est fixée par sa deuxième extrémité à la charpente (10).

7. Dispositif selon la revendication 1, dans lequel la cellule de pesage (18) est intégrée au niveau construction dans l'unité piston-vérin (16).

8. Dispositif selon la revendication 1, dans lequel la cellule de pesage (18) est disposée à l'extrémité opposée au piston (16k) de l'unité piston-vérin (16).

9. Dispositif selon la revendication 1, dans lequel l'unité piston-vérin (16) est une unité fonctionnant de manière pneumatique.

10. Dispositif selon la revendication 1, dans lequel l'unité piston-vérin (16) présente un dispositif de purge d'air (42).

11. Dispositif selon la revendication 5, dans lequel la pièce de manoeuvre (22) consiste en bras de manoeuvre reliés de manière articulée et/ou télescopique l'un à l'autre ainsi qu'un en dispositif de saisie (24) pour l'objet (26) à son extrémité libre.

12. Dispositif selon la revendication 3, dans lequel les bras (12, 14) sont guidés à la manière d'un parallélogramme sur la charpente (10).

13. Dispositif selon la revendication 1, dans lequel le vérin (16z) est articulé à l'unité piston-vérin (16) sur la charpente (10) et le piston (16k) est articulé au levier (H).

14. Dispositif selon la revendication 1, dans lequel l'unité piston-vérin (16) est disposée sur un premier côté du joint articulé (12d, 14d) et l'objet (26) peut être fixé sur un deuxième côté du joint articulé (12d, 14d).
